# EUROPEAN PATENT APPLICATION

(11) **EP 4 840 668 A1**
(43) Date of publication of application: **18.11.2026**
(21) Application number: 24930382.7
(22) Date of filing: 23.09.2024
(51) Int. Cl.: B60K 28/06, G01N 33/48

(54) **VEHICLE CONTROL METHOD, DEVICE AND SYSTEM BASED ON ALCOHOL MEASUREMENT**

(30) Priority: 22.03.2024 CN 202410331008
(71) Applicant: Dongfeng Motor Group Co., Ltd., Wuhan, Hubei 430056 (CN)
(72) Inventor: HONG, Zhiqiang, Wuhan, Hubei 430056 (CN); ZHAN, Rui, Wuhan, Hubei 430056 (CN); LI, Guang, Wuhan, Hubei 430056 (CN); GAO, Hong, Wuhan, Hubei 430056 (CN); KE, Da, Wuhan, Hubei 430056 (CN)
(74) Representative: Gille Hrabal Partnerschaftsgesellschaft mbB Patentanwälte
(86) International application number: PCT/CN2024/120237
(87) International publication number: WO 2025/194723

(57) **Abstract**

The present application discloses a vehicle control method, device and system based on alcohol measurement. The method comprises: when a driver blows into a breath tube, acquiring a first alcohol concentration measured by a first alcohol sensor via a first air pump communicated with the breath tube and a second alcohol concentration measured by a second alcohol sensor via a second air pump communicated with the breath tube; and performing start and concentration display control on a vehicle on the basis of the first alcohol concentration and the second alcohol concentration, wherein the first alcohol concentration is different from the second alcohol concentration. By using two different alcohol concentrations to perform start and concentration display control on the vehicle, the speed and accuracy of vehicle control can be effectively improved.

## Description

### Field of the Invention

The present application belongs to the technical field of vehicle control, and in particular to a vehicle control method, device and system based on alcohol measurement.

### Background of the Invention

In China, approximately 100,000 people die from traffic accidents caused by drunk driving each year, and this number continues to rise. About 30% of road traffic accidents are caused by driving after drinking alcohol or driving under the influence of alcohol. Article 91 of the Road Traffic Safety Law provides that a person who drives a motor vehicle after drinking shall have their motor vehicle driving license temporarily suspended for six months and shall be fined between 1,000 and 2,000 yuan.

Alcohol interlock devices have emerged in response to both the high incidence of accidents and limitations in regulatory enforcement. Through controlling the vehicle based on the result of alcohol measurement of the driver, such devices can technically prevent the dangers caused by drunk driving. How to quickly and accurately control the vehicle based on alcohol measurement results is a problem that urgently needs to be solved.

### Summary of the Invention

The embodiments of the present application provide a vehicle control method, device, and system based on alcohol measurement, which can at least to some extent enable the vehicle to be quickly and accurately controlled.

Other features and advantages of the present application will become apparent from the following detailed description, or can be partially learned through practice of the present application.

According to a first aspect of the embodiments of the present application, a vehicle control method based on alcohol measurement is provided, comprising:
when a driver blows into a breath tube, acquiring a first alcohol concentration measured by a first alcohol sensor via a first air pump communicated with the breath tube and a second alcohol concentration measured by a second alcohol sensor via a second air pump communicated with the breath tube; and
performing start and concentration display control on a vehicle according to the first alcohol concentration and the second alcohol concentration, wherein the first alcohol concentration is different from the second alcohol concentration.

In some embodiments of the present application, based on the foregoing solution, the first air pump is an intermittent air pump, and the second air pump is a continuous air pump; and the step of performing start and concentration display control on the vehicle according to the first alcohol concentration and the second alcohol concentration comprises:
determining a third alcohol concentration according to a first one of the first alcohol concentrations detected by the first alcohol sensor and a preset mapping relationship, wherein the preset mapping relationship is configured to represent a relationship between a single-response concentration of the first alcohol sensor and an actual alcohol concentration;
performing start control on the vehicle according to the third alcohol concentration;
correcting the second alcohol concentration according to the third alcohol concentration to obtain a target alcohol concentration; and
controlling the vehicle to display the target alcohol concentration.

In some embodiments of the present application, based on the foregoing solution, the step of correcting the second alcohol concentration according to the third alcohol concentration to obtain the target alcohol concentration comprises:
determining a maximum alcohol concentration among a plurality of the second alcohol concentrations detected by the second alcohol sensor before the second alcohol sensor reaches saturation; and
determining the target alcohol concentration according to the third alcohol concentration, the maximum alcohol concentration, and a penultimate one of the first alcohol concentrations detected by the first alcohol sensor.

In some embodiments of the present application, based on the foregoing solution, the target alcohol concentration is calculated according to the following formula: ${X}_{0} = {X}_{max} \times \left(1+\frac{{X}_{y} - {X}_{max}}{{X}_{n - 1}}\right) ;$ wherein *X*₀ is the target alcohol concentration; *X*ₘₐₓ is the maximum alcohol concentration; *X_{y}* is the third alcohol concentration; and *X*ₙ₋₁ is the penultimate one of the first alcohol concentrations.

In some embodiments of the present application, based on the foregoing solution, the vehicle control method based on alcohol measurement further comprises:
determining that alcohol is present in a mouth of the driver when a second one of the first alcohol concentrations detected by the first alcohol sensor is greater than the first one of the first alcohol concentrations detected by the first alcohol sensor.

**In** some embodiments of the present application, based on the foregoing solution, the first air pump and the second air pump are both continuous air pumps, and a flow rate of gas obtained from the breath tube by the first air pump is greater than the flow rate of gas obtained from the breath tube by the second air pump, and the step of performing start and concentration display control on the vehicle according to the first alcohol concentration and the second alcohol concentration comprises:
performing start control on the vehicle according to the first alcohol concentration; and
performing concentration display control on the vehicle according to the second alcohol concentration.

**In** some embodiments of the present application, based on the foregoing solution, the flow rate of gas obtained from the breath tube by the first air pump is greater than or equal to twice the flow rate of gas obtained from the breath tube by the second air pump.

**In** some embodiments of the present application, based on the foregoing solution, the vehicle control method based on alcohol measurement further comprises:
determining whether the first alcohol concentration is greater than a preset concentration after the first air pump is turned on; and
not turning on the second air pump when the first alcohol concentration is not greater than the preset concentration.

According to a second aspect of embodiments of the present application, a vehicle control device based on alcohol measurement is provided, comprising a processor and a memory, wherein the memory stores computer program instructions executable by the processor, and when the processor executes the computer program instructions, the steps of the method according to any one of the first aspect described above are implemented.

According to a third aspect of embodiments of the present application, a vehicle control system based on alcohol measurement is provided, comprising the vehicle control device based on alcohol measurement, a breath tube, a first air pump, a first alcohol sensor, a second air pump, and a second alcohol sensor, wherein
the first air pump and the second air pump are respectively communicated with the breath tube, the first air pump is connected to the vehicle control device based on alcohol measurement via the first alcohol sensor, and the second air pump is connected to the vehicle control device based on alcohol measurement via the second alcohol sensor.

In the present application, when a driver blows into a breath tube, a first alcohol concentration measured by a first alcohol sensor via a first air pump communicated with the breath tube and a second alcohol concentration measured by a second alcohol sensor via a second air pump communicated with the breath tube are acquired; and start and concentration display control is performed on a vehicle according to the first alcohol concentration and the second alcohol concentration, wherein the first alcohol concentration is different from the second alcohol concentration. Through using two different alcohol concentrations to perform start and concentration display control on the vehicle, the speed and accuracy of vehicle control can be effectively improved.

It should be understood that the foregoing general description and the following detailed description are merely exemplary and explanatory, and do not limit the present application.

### Brief Description of the Drawings

The drawings are incorporated into the specification and form a part thereof, illustrating embodiments in accordance with the present application and being used together with the specification to explain the principles of the present application. It is obvious that the drawings in the following description are only a part of embodiments of the present application, for those skilled in the art, other drawings can also be obtained based on these drawings without any inventive effort. In the figures:
Fig. 1 shows a flowchart of a vehicle control method based on alcohol measurement in an embodiment of the present application;
Fig. 2 shows a structural diagram of a vehicle control system based on alcohol measurement in an embodiment of the present application;
Fig. 3 shows response and recovery variation curves of the first alcohol sensor when the first air pump is an intermittent air pump in Fig. 2;
Fig. 4 shows response and recovery variation curves of the second alcohol sensor when the second air pump is a continuous air pump in Fig. 2;
Fig. 5 shows a relationship diagram between a single-response concentration of the first alcohol sensor and an actual alcohol concentration when the first air pump is an intermittent air pump in Fig. 2;
Fig. 6 shows a comparison diagram of response and recovery variation curves when both the first air pump and the second air pump are continuous air pumps in Fig. 2;
Fig. 7 shows another comparison diagram of response and recovery variation curves when both the first air pump and the second air pump are continuous air pumps in Fig. 2; and
Fig. 8 shows a structural diagram of a vehicle control device based on alcohol measurement in an embodiment of the present application.

### Detailed Description of the Embodiments

In the following, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those skilled in the art without inventive efforts shall fall within the protection scope of the present application.

In addition, the described features, structures, or characteristics can be combined in any suitable manner in one or more embodiments. In the following description, numerous specific details are provided in order to give a full understanding of the embodiments of the present application. However, those skilled in the art will realize that the technical solutions of the present application can be practiced without one or more of the specific details, or that other methods, components, apparatus, steps, etc. can be adopted. In other cases, well-known methods, apparatus, implementations, or operations are not described in detail in order to avoid obscuring various aspects of the present application.

The block diagrams shown in the drawings merely represent functional entities and do not necessarily correspond to physically independent entities. That is, the functional entities can be implemented in software, or can be implemented in one or more hardware modules or integrated circuits, or can be implemented in different networks and/or processor devices and/or microcontroller devices.

The flowcharts shown in the drawings are illustrative only, and do not necessarily comprise all contents and operations/steps, nor must they be executed in the order described. For example, some operations/steps can be further decomposed, while some operations/steps can be combined or partially combined. Therefore, the actual order of execution may change according to actual conditions.

It should also be noted that the terms "first", "second", and the like in the specification, claims, and above drawings of the present application are used to distinguish similar objects and are not necessarily used to describe a specific order or sequence. It should be understood that the objects so used can be interchanged under appropriate circumstances, so that the embodiments of the present application described herein can be implemented in sequences other than those illustrated or described.

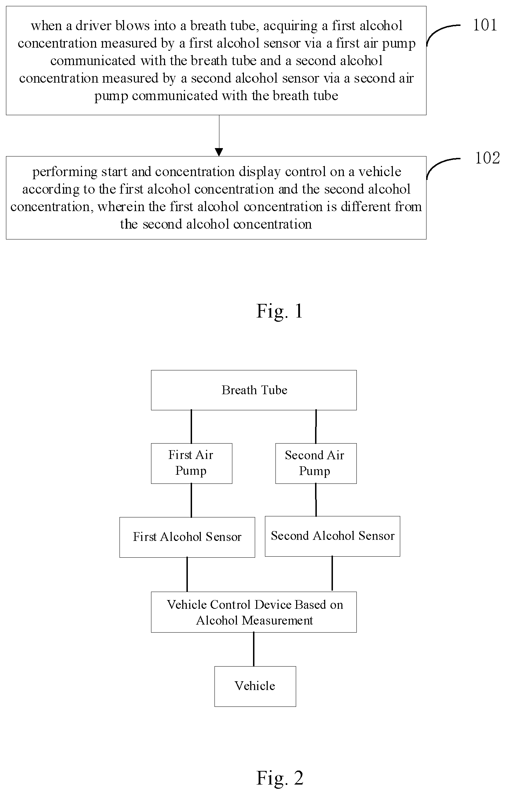

Fig. 1 shows a flowchart of a vehicle control method based on alcohol measurement in an embodiment of the present application. As shown in Fig. 1, a vehicle control method based on alcohol measurement is provided, and the method can comprise the following S101 to S102.

**In** S101, when a driver blows into a breath tube, a first alcohol concentration measured by a first alcohol sensor via a first air pump communicated with the breath tube and a second alcohol concentration measured by a second alcohol sensor via a second air pump communicated with the breath tube are acquired; and
in S102, start and concentration display control is performed on a vehicle according to the first alcohol concentration and the second alcohol concentration, wherein the first alcohol concentration is different from the second alcohol concentration.

It can be understood that the first alcohol sensor and the second alcohol sensor can be semiconductor sensors, electrochemical sensors, or infrared sensors, etc. The semiconductor sensor has low detection accuracy, a slow response time, and a relatively low cost; the electrochemical sensor has high detection accuracy but is easily affected by high and low temperatures; and the infrared sensor has high detection accuracy but is expensive.

**In** some embodiments, the first alcohol sensor and the second alcohol sensor are both low-cost semiconductor alcohol sensors, and the vehicle control method of the present application is used to compensate for the disadvantages of low detection accuracy and slow response time of semiconductor alcohol sensors, so as to achieve the purpose of quickly and accurately controlling the vehicle.

Fig. 2 shows a structural diagram of a vehicle control system based on alcohol measurement in an embodiment of the present application. As shown in Fig. 2, the vehicle control system based on alcohol measurement can comprise a vehicle control device based on alcohol measurement, a breath tube, a first air pump, a first alcohol sensor, a second air pump, and a second alcohol sensor, wherein the first air pump and the second air pump are respectively communicated with the breath tube, the first air pump is connected to the vehicle control device based on alcohol measurement via the first alcohol sensor, and the second air pump is connected to the vehicle control device based on alcohol measurement via the second alcohol sensor.

**In** an implementation process, the vehicle control device based on alcohol measurement can be arranged inside or outside the vehicle, which is not limited in the embodiments of the present application. After a driver gets into the vehicle, the driver blows into the breath tube, and gas is respectively drawn by the first air pump and the second air pump to the first alcohol sensor and the second alcohol sensor for reaction. The vehicle control device based on alcohol measurement processes the alcohol concentrations detected by the two sets of alcohol sensors, and determines whether the vehicle is authorized to start and performs alcohol concentration display. Of course, the relevant detection data can also be uploaded to a cloud platform for system management.

In some embodiments, the first air pump is an intermittent air pump and the second air pump is a continuous air pump, and the step of performing start and concentration display control on the vehicle according to the first alcohol concentration and the second alcohol concentration can comprise: determining a third alcohol concentration according to a first one of the first alcohol concentrations detected by the first alcohol sensor and a preset mapping relationship, wherein the preset mapping relationship is configured to represent a relationship between a single-response concentration of the first alcohol sensor and an actual alcohol concentration; performing start control on the vehicle according to the third alcohol concentration; correcting the second alcohol concentration according to the third alcohol concentration to obtain a target alcohol concentration; and controlling the vehicle to display the target alcohol concentration.

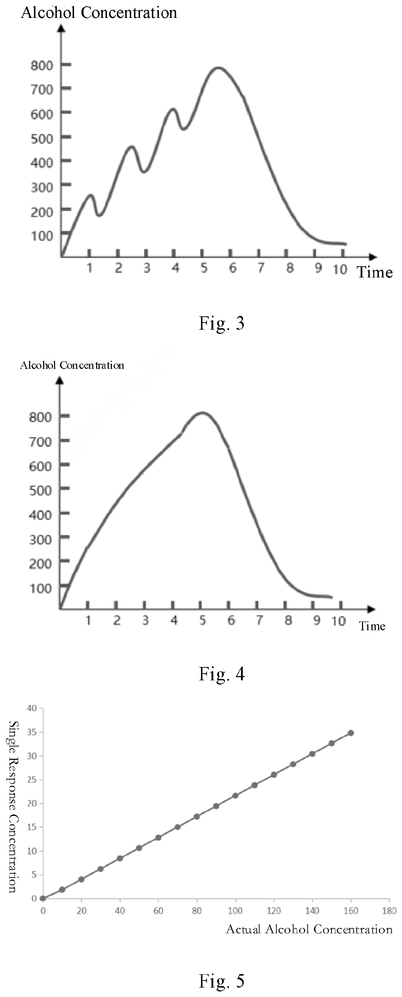

Fig. 3 shows response and recovery variation curves of the first alcohol sensor when the first air pump is an intermittent air pump in Fig. 2, wherein the horizontal axis represents time (unit: s) and the vertical axis represents alcohol concentration (unit: ppm). As shown in Fig. 3, the first alcohol sensor undergoes incomplete reaction with alcohol during air suction by the intermittent air pump, and the detected alcohol concentration exhibits a plurality of peak values. Fig. 4 shows response and recovery variation curves of the second alcohol sensor when the second air pump is a continuous air pump in Fig. 2, wherein the horizontal axis represents time (unit: s) and the vertical axis represents alcohol concentration (unit: ppm). As shown in Fig. 4, the second alcohol sensor undergoes complete reaction with alcohol during air suction by the continuous air pump, and the detected alcohol concentration exhibits a single peak value. According to Fig. 3 and Fig. 4, it can be seen that the highest peak values of alcohol concentration detected by the first alcohol sensor and the second alcohol sensor are substantially close, and the second alcohol sensor has a faster recovery speed.

Fig. 5 shows a relationship diagram between a single-response concentration of the first alcohol sensor and an actual alcohol concentration when the first air pump is an intermittent air pump in Fig. 2. The relationship diagram can be calibrated in a laboratory environment, wherein the horizontal axis represents actual alcohol concentration (unit: mg/100 ml) and the vertical axis represents single-response concentration (unit: ppm). It is assumed that the air suction time of the intermittent air pump is set to 1s in the laboratory environment, with different air suction times, the single-response concentration of the sensor also varies, and thus a plurality of sets of data comprising single-response concentration and actual alcohol concentration can be obtained, and through fitting these data, a mapping relationship between the single-response concentration and the actual alcohol concentration can be obtained. Fig. 5 shows an ideal linear relationship, and for alcohol sensors from different manufacturers, the mapping relationship between the single-response concentration and the actual alcohol concentration is also different.

If the driver has consumed alcohol, both the first alcohol sensor and the second alcohol sensor will respond after the driver blows into the breath tube. The actual alcohol concentration of the driver exhaled breath (i.e., the third alcohol concentration) can be predicted based on the first response result of the first alcohol sensor (i.e., the first one of the first alcohol concentrations) and the above preset mapping relationship, so as to timely determine whether to grant vehicle start permission. The intermittent air pump and the continuous air pump operate continuously, the first alcohol sensor performs a plurality of rounds of incomplete reactions, and each response result of the first alcohol sensor is compared and analyzed with the response result of the second alcohol sensor after complete reaction, and finally, the alcohol concentration after comparison and analysis (i.e., the target alcohol concentration) is displayed at a vehicle end.

**In** an implementation process, a maximum alcohol concentration among a plurality of the second alcohol concentrations detected by the second alcohol sensor can be determined before the second alcohol sensor reaches saturation; and the target alcohol concentration can be determined according to the third alcohol concentration, the maximum alcohol concentration, and a penultimate one of the first alcohol concentrations detected by the first alcohol sensor.

It is assumed that the response time for sufficient reaction between the alcohol sensor and alcohol is 5s, and that each breath of the driver lasts not less than 3s. Therefore, the time for the second alcohol sensor to obtain a response result after complete reaction is 8s. The suction time of the intermittent air pump is set to 0.5~1.5s, and the idle time is half of the suction time. The shorter the suction time of the intermittent air pump is, the faster the response result is obtained. The continuous air pump continuously performs air suction during the driver blowing process. The flow rate of both the intermittent air pump and the continuous air pump can be set within a range of 200 ml/min to 400 ml/min.

The multiple-round response results of the first alcohol sensor are all required to be compared with the real-time response results of the second alcohol sensor. The first alcohol concentrations detected in each round by the first alcohol sensor are successively denoted as X₁, X₂, X₃, ... Xₙ₋₁, and Xₙ, the second alcohol concentration detected in real time by the second alcohol sensor is denoted as Xt, the maximum alcohol concentration detected by the second alcohol sensor is denoted as Xₘₐₓ, and the third alcohol concentration predicted based on the first one of the first alcohol concentration X₁ is denoted as X_{y}.

The target alcohol concentration is calculated according to the following formula: ${X}_{0} = {X}_{max} \times \left(1+\frac{{X}_{y} - {X}_{max}}{{X}_{n - 1}}\right) ;$ wherein X₀ is the target alcohol concentration; *X*ₘₐₓ is the maximum alcohol concentration; *X_{y}* is the third alcohol concentration; and *X*ₙ₋₁ is the penultimate one of the first alcohol concentrations.

Taking as an example that the first alcohol concentrations detected by the first alcohol sensor are successively X₁ = 10 mg/100 ml, X₂ = 40 mg/100 ml, X₃ = 80 mg/100 ml, X₄ = 130 mg/100 ml, and X₅ = 120 mg/100 ml, the maximum alcohol concentration *X*ₘₐₓ detected by the second alcohol sensor is 140 mg/100 ml, and the third alcohol concentration X_{y} obtained based on the first one of the first alcohol concentration X₁ is 138 mg/100 ml, and the final displayed target alcohol concentration *X*₀ obtained through the above formula is 137.8 mg/100 ml.

In some embodiments, it can be determined that alcohol is present in the mouth of the driver when the second one of the first alcohol concentrations detected by the first alcohol sensor is greater than the first one of the first alcohol concentrations detected by the first alcohol sensor.

It should be noted that, after the driver consumes alcohol-containing food (such as sponge cake, etc.), alcohol is likely to remain in the mouth of the driver. However, the alcohol sensor measures the alcohol concentration in the alveolar breath of the driver. If only whether alcohol is present in the mouth of the driver needs to be detected, the detection result can be determined based on the first several first alcohol concentrations detected by the first alcohol sensor. For example, when X₂ > X₁ or X₃ > X₂, it is determined that alcohol is present in the mouth of the driver. Compared with the prior art in which the response curve of an alcohol sensor after complete reaction is analyzed, the proposed solution can obtain the detection result more quickly when configured to detect whether alcohol is present in the mouth of the driver.

In some embodiments, the first air pump and the second air pump are both continuous air pumps, and the flow rate of gas obtained from the breath tube by the first air pump is greater than the flow rate of gas obtained from the breath tube by the second air pump, and the step of performing start and concentration display control on the vehicle according to the first alcohol concentration and the second alcohol concentration can comprise: performing start control on the vehicle according to the first alcohol concentration; and performing concentration display control on the vehicle according to the second alcohol concentration.

It can be understood that, since the flow rate of gas obtained from the breath tube by the first air pump is greater than the flow rate of gas obtained from the breath tube by the second air pump, the first alcohol sensor can quickly obtain the first alcohol concentration. Although the second alcohol sensor obtains the second alcohol concentration more slowly, the second alcohol concentration is more accurate than the first alcohol concentration. Therefore, based on the first alcohol concentration, vehicle start control is performed, enabling rapid vehicle start and avoiding long waiting time for the driver. Meanwhile, based on the second alcohol concentration, concentration display control is performed, thereby enabling more accurate alcohol concentration display in the vehicle.

In some embodiments, the flow rate of gas obtained from the breath tube by the first air pump is greater than or equal to twice the flow rate of gas obtained from the breath tube by the second air pump, such that the response time of the first alcohol sensor is significantly shorter than that of the second alcohol sensor, i.e., the first alcohol sensor can obtain the first alcohol concentration more quickly.

In some embodiments, the first air pump and the second air pump can operate simultaneously, or the first air pump can be turned on first, and the second air pump can be turned on after a preset duration.

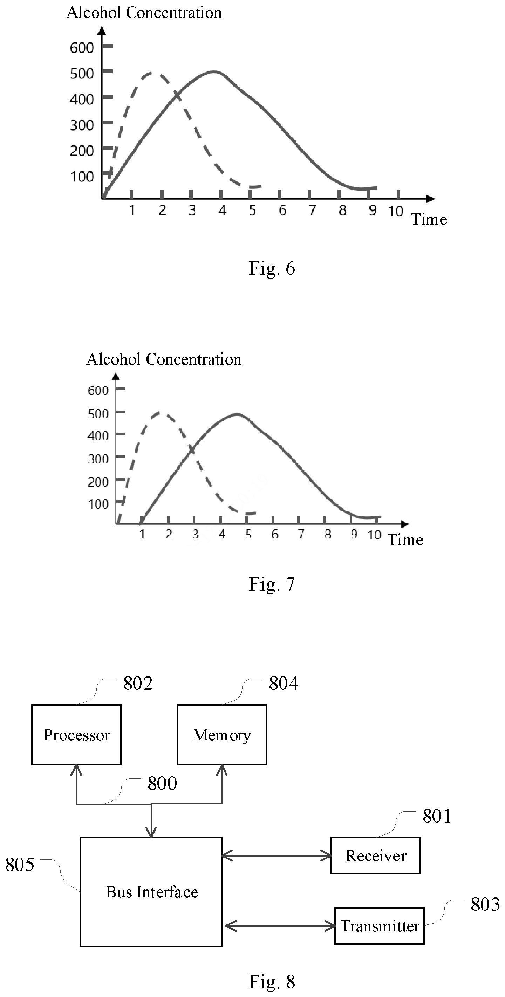

Fig. 6 shows a comparison diagram of response and recovery variation curves when both the first air pump and the second air pump are continuous air pumps in Fig. 2, wherein the horizontal axis represents time (unit: s) and the vertical axis represents alcohol concentration (unit: ppm). As shown in Fig. 6, the dashed line represents the response and recovery variation curve of the first alcohol sensor, and the solid line represents the response and recovery variation curve of the second alcohol sensor. The maximum peak values of the two curves are substantially close, and the response and recovery of the first alcohol sensor are slightly faster. After the driver consumes alcohol and blows into the breath tube, the first air pump and the second air pump operate simultaneously, and both the first alcohol sensor and the second alcohol sensor respond. Whether vehicle start permission is granted can be determined according to the first alcohol concentration detected by the first alcohol sensor, and then the second alcohol concentration detected by the second alcohol sensor is displayed on the vehicle.

Fig. 7 shows another comparison diagram of response and recovery variation curves when both the first air pump and the second air pump are continuous air pumps in Fig. 2, wherein the horizontal axis represents time (unit: s) and the vertical axis represents alcohol concentration (unit: ppm). As shown in Fig. 7, the dashed line represents the response and recovery variation curve of the first alcohol sensor, and the solid line represents the response and recovery variation curve of the second alcohol sensor. The start time of the second air pump is 1 s later than that of the first air pump.

In the present application, the unit ppm on the vertical axis in Fig. 3, Fig. 4, Fig. 6, and Fig. 7 represents the concentration of alcohol gas exhaled by the human body, and the unit mg/100 ml on the horizontal axis in Fig. 5 represents the blood alcohol content.

In an implementation process, after the first air pump is turned on, it can be determined whether the first alcohol concentration is greater than a preset concentration; and when the first alcohol concentration is not greater than the preset concentration, the second air pump is not turned on.

It can be understood that, when the first air pump operates, the first alcohol sensor starts responding, and if the first alcohol concentration detected by the first alcohol sensor exceeds the preset concentration, whether vehicle start permission is granted is determined based on the first alcohol concentration, and after a preset duration of response, the second air pump is controlled to start operating. At this time, the second alcohol sensor begins to respond, and the second alcohol concentration detected by the second alcohol sensor is output to a vehicle display. If the first alcohol sensor does not detect the first alcohol concentration, or if the detected first alcohol concentration does not exceed the preset concentration, the second air pump is controlled not to operate, the second alcohol sensor also does not respond, the vehicle is directly controlled to start, and the first alcohol concentration is displayed on the vehicle. Through this method, the frequency of use of the second alcohol sensor, which is a precision measurement sensor, and the total exposure to gas can be significantly reduced, thereby extending the service life of the second alcohol sensor.

**In** the embodiments of the present application, when the driver blows into the breath tube, the first alcohol concentration measured by the first alcohol sensor via the first air pump communicated with the breath tube and the second alcohol concentration measured by the second alcohol sensor via the second air pump communicated with the breath tube are acquired; and start and concentration display control is performed on the vehicle according to the first alcohol concentration and the second alcohol concentration, wherein the first alcohol concentration is different from the second alcohol concentration. Through using two different alcohol concentrations for vehicle start control and concentration display control, the waiting time of the driver before driving can be shortened and the speed of vehicle start control can be improved, and more accurate detection results can also be obtained. Through correcting the second alcohol concentration using a predicted concentration of the first alcohol concentration, the accuracy of the alcohol concentration displayed in the vehicle can be further improved.

The following describes apparatus embodiments of the present application, which can be adopted to execute the vehicle control method based on alcohol measurement in the above embodiments of the present application. For details not disclosed in the apparatus embodiments of the present application, reference can be made to the above embodiments of the vehicle control method based on alcohol measurement of the present application.

The vehicle control apparatus based on alcohol measurement in the embodiments of the present application can comprise a concentration acquisition module and a vehicle control module, wherein the concentration acquisition module is configured to, when the driver blows into the breath tube, acquire the first alcohol concentration measured by the first alcohol sensor via the first air pump communicated with the breath tube and the second alcohol concentration measured by the second alcohol sensor via the second air pump communicated with the breath tube; and the vehicle control module is configured to perform start and concentration display control on a vehicle according to the first alcohol concentration and the second alcohol concentration, wherein the first alcohol concentration is different from the second alcohol concentration.

**In** some embodiments of the present application, based on the foregoing solution, the first air pump is an intermittent air pump and the second air pump is a continuous air pump, and the vehicle control module is further configured to determine a third alcohol concentration according to a first one of the first alcohol concentrations detected by the first alcohol sensor and a preset mapping relationship, wherein the preset mapping relationship is configured to represent a relationship between a single-response concentration of the first alcohol sensor and an actual alcohol concentration; perform start control on the vehicle according to the third alcohol concentration; correct the second alcohol concentration according to the third alcohol concentration to obtain a target alcohol concentration; and control the vehicle to display the target alcohol concentration.

**In** some embodiments of the present application, based on the foregoing solution, the vehicle control module is further configured to, before the second alcohol sensor reaches saturation, determine a maximum alcohol concentration among a plurality of the second alcohol concentrations detected by the second alcohol sensor; and determine the target alcohol concentration according to the third alcohol concentration, the maximum alcohol concentration, and a penultimate one of first alcohol concentrations detected by the first alcohol sensor.

**In** some embodiments of the present application, based on the above solution, the target alcohol concentration is calculated according to the following formula: ${X}_{0} = {X}_{max} \times \left(1+\frac{{X}_{y} - {X}_{max}}{{X}_{n - 1}}\right) ;$ wherein *X*₀ is the target alcohol concentration; *X*ₘₐₓ is the maximum alcohol concentration; *X_{y}* is the third alcohol concentration; and *X*ₙ₋₁ is the penultimate one of the first alcohol concentrations.

**In** some embodiments of the present application, based on the foregoing solution, the vehicle control apparatus based on alcohol measurement can further comprise an oral alcohol detection module, which is configured to determine that alcohol is present in the mouth of the driver when the second one of the first alcohol concentrations detected by the first alcohol sensor is greater than the first one of the first alcohol concentrations detected by the first alcohol sensor.

**In** some embodiments of the present application, based on the foregoing solution, the first air pump and the second air pump are both continuous air pumps, and a flow rate of gas obtained from the breath tube by the first air pump is greater than the flow rate of gas obtained from the breath tube by the second air pump, and the vehicle control module is further configured to perform start control on the vehicle according to the first alcohol concentration; and perform concentration display control on the vehicle according to the second alcohol concentration.

In some embodiments of the present application, based on the foregoing solution, the flow rate of gas obtained from the breath tube by the first air pump is greater than or equal to twice the flow rate of gas obtained from the breath tube by the second air pump.

In some embodiments of the present application, based on the foregoing solution, the vehicle control apparatus based on alcohol measurement can further comprise an air pump control module, which is configured to, after the first air pump is turned on, determine whether the first alcohol concentration is greater than a preset concentration; and not turn on the second air pump when the first alcohol concentration is not greater than the preset concentration.

Based on the same inventive concept, the embodiments of the present application further provide a vehicle control device based on alcohol measurement. Referring to Fig. 8, a structural diagram of the vehicle control device based on alcohol measurement in the embodiments of the present application is shown. The vehicle control device based on alcohol measurement comprises one or more memories 804, one or more processors 802, and at least one computer program (computer program instruction) stored in the memory 804 and executable on the processor 802, and when the processor 802 executes the computer program, the foregoing method is implemented.

In Fig. 8, a bus architecture (represented by a bus 800) is provided, and the bus 800 can comprise any number of interconnected buses and bridges, linking together various circuits of one or more processors represented by the processor 802 and memories represented by the memory 804. The bus 800 can further link various other circuits, such as peripheral devices, voltage regulators, and power management circuits, which are well known in the art, and thus will not be described in further detail herein. A bus interface 805 provides an interface between the bus 800 and a receiver 801 and a transmitter 803. The receiver 801 and the transmitter 803 can be the same component, namely a transceiver, providing units for communication with various other devices over a transmission medium. The processor 802 is responsible for managing the bus 800 and perform general processing, while the memory 804 can be configured to store data utilized by the processor 802 during execution of operations.

Based on the same inventive concept, the embodiments of the present application provide a computer-readable storage medium, the computer-readable storage medium stores computer program instructions, and when the computer program instructions are executed by a processor, the processor is caused to implement the steps of the foregoing method.

Based on the same inventive concept, the embodiments of the present application provide a vehicle control system based on alcohol measurement, which comprise the vehicle control device based on alcohol measurement, a breath tube, a first air pump, a first alcohol sensor, a second air pump, and a second alcohol sensor, wherein the first air pump and the second air pump are respectively communicated with the breath tube, the first air pump is connected to the vehicle control device based on alcohol measurement via the first alcohol sensor, and the second air pump is connected to the vehicle control device based on alcohol measurement via the second alcohol sensor.

The functions described herein can be implemented in hardware, software executed by a processor, firmware, or any combination thereof. If implemented in the software executed by the processor, the functions can be stored as one or more instructions or code on a computer-readable medium or transmitted via a computer-readable medium. Other examples and embodiments are within the scope and spirit of the present application and the appended claims. For instance, due to the nature of software, the functions described above can be implemented in software executed by a processor, hardware, firmware, hard-wired circuitry, or any combination thereof. **In** addition, the functional units can be integrated into a single processing unit, or each unit can physically exist separately, or two or more units can be integrated into one unit.

It should be understood that, in the various embodiments provided in the present application, the disclosed technical content can be implemented in other ways. The apparatus embodiments described above are merely illustrative. For example, the division of units can be a logical functional division, and in actual implementation, alternative divisions can be employed, such as a plurality of units or components can be combined or integrated into another system, or certain features can be omitted or not executed. Additionally, any coupling or direct coupling or communication connection shown or discussed can be an indirect coupling or communication connection through one or more interfaces, units, or modules, and can be in electrical or other forms.

The units described as separate components can or can not be physically separate, and the components of the control device can or can not constitute physical units, that is, they can be located in a single place or distributed across a plurality of units. Depending on actual needs, some or all of the units can be selected to achieve the objectives of the embodiments of the present application.

If the integrated unit is implemented as a software functional unit and sold or used as a standalone product, it can be stored on a computer-readable storage medium. Based on such an understanding, the technical solution of the present application, or the part that contributes to the prior art, or the whole or part of the technical solution can be embodied as a software product. This computer software product is stored in a storage medium and comprises a plurality of instructions that enable a computer device (which can be a personal computer, server, or network device, etc.) to execute all or part of the steps of the method in the embodiments of the present application. The storage media described above comprise various media capable of storing computer program instructions, such as universal serial bus (USB) flash drives, read-only memory (ROM), random access memory (RAM), portable hard drives, magnetic disks, or optical disks.

The above is only exemplary embodiments of the present application and does not limit the scope of the present application. For those skilled in the art, the present application can have various modifications and variations. Any modifications, equivalent substitutions, improvements, etc. made within the spirit and principles of the present application shall be included within the scope of the claims of the present application.

## Claims

1. A vehicle control method based on alcohol measurement, comprising:
when a driver blows into a breath tube, acquiring a first alcohol concentration measured by a first alcohol sensor via a first air pump communicated with the breath tube and a second alcohol concentration measured by a second alcohol sensor via a second air pump communicated with the breath tube; and
performing start and concentration display control on a vehicle according to the first alcohol concentration and the second alcohol concentration, wherein the first alcohol concentration is different from the second alcohol concentration.

2. The vehicle control method based on alcohol measurement according to claim 1, wherein the first air pump is an intermittent air pump, and the second air pump is a continuous air pump; and the step of performing start and concentration display control on the vehicle according to the first alcohol concentration and the second alcohol concentration comprises:
determining a third alcohol concentration according to a first one of the first alcohol concentrations detected by the first alcohol sensor and a preset mapping relationship, wherein the preset mapping relationship is configured to represent a relationship between a single-response concentration of the first alcohol sensor and an actual alcohol concentration;
performing start control on the vehicle according to the third alcohol concentration;
correcting the second alcohol concentration according to the third alcohol concentration to obtain a target alcohol concentration; and
controlling the vehicle to display the target alcohol concentration.

3. The vehicle control method based on alcohol measurement according to claim 2, wherein the step of correcting the second alcohol concentration according to the third alcohol concentration to obtain the target alcohol concentration comprises:
determining a maximum alcohol concentration among a plurality of the second alcohol concentrations detected by the second alcohol sensor before the second alcohol sensor reaches saturation; and
determining the target alcohol concentration according to the third alcohol concentration, the maximum alcohol concentration, and a penultimate one of the first alcohol concentrations detected by the first alcohol sensor.

4. The vehicle control method based on alcohol measurement according to claim 3, wherein the target alcohol concentration is calculated according to the following formula: ${X}_{0} = {X}_{max} \times \left(1+\frac{{X}_{y} - {X}_{max}}{{X}_{n - 1}}\right) ;$ wherein *X*₀ is the target alcohol concentration; *X*ₘₐₓ is the maximum alcohol concentration; *X_{y}* is the third alcohol concentration; and *X*ₙ₋₁ is the penultimate one of the first alcohol concentrations.

5. The vehicle control method based on alcohol measurement according to claim 2, wherein the method further comprises:
determining that alcohol is present in a mouth of the driver when a second one of the first alcohol concentrations detected by the first alcohol sensor is greater than the first one of the first alcohol concentrations detected by the first alcohol sensor.

6. The vehicle control method based on alcohol measurement according to claim 1, wherein the first air pump and the second air pump are both continuous air pumps, and a flow rate of gas obtained from the breath tube by the first air pump is greater than the flow rate of gas obtained from the breath tube by the second air pump, and the step of performing start and concentration display control on the vehicle according to the first alcohol concentration and the second alcohol concentration comprises:
performing start control on the vehicle according to the first alcohol concentration; and
performing concentration display control on the vehicle according to the second alcohol concentration.

7. The vehicle control method based on alcohol measurement according to claim 6, wherein the flow rate of gas obtained from the breath tube by the first air pump is greater than or equal to twice the flow rate of gas obtained from the breath tube by the second air pump.

8. The vehicle control method based on alcohol measurement according to claim 6, wherein the method further comprises:
determining whether the first alcohol concentration is greater than a preset concentration after the first air pump is turned on; and
not turning on the second air pump when the first alcohol concentration is not greater than the preset concentration.

9. A vehicle control device based on alcohol measurement, comprising a processor and a memory, wherein the memory stores computer program instructions executable by the processor, and when the processor executes the computer program instructions, the steps of the method according to any one of claims 1 to 8 are implemented.

10. A vehicle control system based on alcohol measurement, comprising the vehicle control device based on alcohol measurement according to claim 9, a breath tube, a first air pump, a first alcohol sensor, a second air pump, and a second alcohol sensor, wherein
the first air pump and the second air pump are respectively communicated with the breath tube, the first air pump is connected to the vehicle control device based on alcohol measurement via the first alcohol sensor, and the second air pump is connected to the vehicle control device based on alcohol measurement via the second alcohol sensor.
